# EUROPEAN PATENT APPLICATION

(11) **EP 3 883 160 A1**
(43) Date of publication of application: **22.09.2021**
(21) Application number: 19892766.7
(22) Date of filing: 19.11.2019
(51) Int. Cl.: H04L 1/00

(54) **DATA TRANSMISSION METHOD AND COMMUNICATION APPARATUS**

(30) Priority: 07.12.2018 CN 201811497222
(71) Applicant: Huawei Technologies Co., Ltd., Shenzhen Guangdong 518129 (CN)
(72) Inventor: XU, Bin, Shenzhen, Guangdong 518129 (CN); LI, Bingzhao, Shenzhen, Guangdong 518129 (CN); CHEN, Lei, Shenzhen, Guangdong 518129 (CN); SHAN, Baokun, Shenzhen, Guangdong 518129 (CN); WANG, Xuelong, Shenzhen, Guangdong 518129 (CN)
(74) Representative: Isarpatent
(86) International application number: PCT/CN2019/119405
(87) International publication number: WO 2020/114237

(57) **Abstract**

Embodiments of this application provide a data transmission method and a communication apparatus. The method includes: A network device sends indication information to a terminal device, where the indication information is used to indicate a first transmission mode, and the first transmission mode includes: enabling a hybrid automatic repeat request function, disabling the hybrid automatic repeat request function, or at least one hybrid automatic repeat request mode. Therefore, after receiving the indication information sent by the network device, the terminal device determines the first transmission mode based on the indication information, and performs data transmission in the first transmission mode, to perform data transmission based on requirements of different services. In this way, flexibility of the data transmission is improved.

## Description

This application claims priority to Chinese Patent Application No. 201811497222.3, filed with the Chinese Patent Office on December 7, 2018 and entitled "DATA TRANSMISSION METHOD AND COMMUNICATION APPARATUS", which is incorporated herein by reference in its entirety.

### TECHNICAL FIELD

This application relates to the field of communication technologies, and in particular, to a data transmission method and a communication apparatus.

### BACKGROUND

In the field of communication technologies, to ensure reliability of data transmission, a hybrid automatic repeat request (Hybrid Automatic Repeat reQuest, HARQ) mode is usually used for data feedback and retransmission during the data transmission.

In a current technology, for a terminal device, data retransmission needs to be performed in the HARQ mode for all services. However, in the field of communication technologies, there are a plurality of services with different transmission requirements. Although the HARQ can be used to improve reliability of data transmission, a feedback-retransmission mechanism of the HARQ also causes a transmission latency. Consequently, an existing transmission method is simple, and data transmission cannot be performed based on requirements of different services. In this way, flexibility of data transmission is not high.

### SUMMARY

This application provides a data transmission method and a communication apparatus, so that transmission can be performed based on requirements of different services, to improve flexibility of data transmission.

According to a first aspect, an embodiment of this application provides a data transmission method. The data transmission method may include:
A network device sends indication information to a terminal device, where the indication information is used to indicate a first transmission mode, and the first transmission mode includes: enabling a hybrid automatic repeat request function, disabling the hybrid automatic repeat request function, or at least one hybrid automatic repeat request mode. Therefore, the terminal device receives the indication information, and determines the first transmission mode based on the indication information. Specifically, the terminal device enables the hybrid automatic repeat request function, disables the hybrid automatic repeat request function, or uses one or more of the at least one hybrid automatic repeat request mode, and performs data transmission. In this way, different transmission modes can be used based on requirements of different services, and therefore flexibility of data transmission is improved.

Alternatively, the network device sends indication information to the terminal device, where the indication information includes one or more identifiers of one or more logical channels.

In a possible implementation, the indication information includes at least one of the first transmission mode, a first hybrid automatic repeat request process identifier, and the identifiers of the one or more logical channels. Therefore, the terminal may transmit, on an uplink resource or in a first hybrid automatic repeat request process, data of a corresponding logical channel based on at least one of the first transmission mode, the first hybrid automatic repeat request process identifier, or the identifiers of the one or more logical channels.

In a possible implementation, the indication information includes the first transmission mode, and the data transmission method may further include:
The network device determines the first transmission mode based on an identifier that is of a logical channel group and that is sent by the terminal device. In this way, the first transmission mode may be sent to the terminal device, so that the terminal device may transmit, on an uplink resource in the first transmission mode, data of a logical channel corresponding to the first transmission mode. Further, optionally, the indication information includes the identifier of the logical channel group. The identifier of the logical channel group may be identifiers of one or more logical channel groups. The indication information may further indicate a transmission mode corresponding to the identifier of the logical channel group. Specifically, the first transmission mode may be one or more first transmission modes, and the indication information may indicate first transmission modes respectively corresponding to the identifiers of the one or more logical channel groups.

In a possible implementation, the data transmission method may further include:
The network device sends first configuration information to the terminal device, where the first configuration information is used to indicate a transmission mode corresponding to at least one logical channel. Therefore, the terminal device may learn of the transmission mode corresponding to the at least one logical channel. In this way, after receiving the first transmission mode sent by the network device, the terminal device may determine, based on the first transmission mode and the transmission mode corresponding to the at least one logical channel, at least one logical channel using the first transmission mode.

In a possible implementation, the indication information includes the first hybrid automatic repeat request process identifier, and the data transmission method may further include:
The network device determines the first hybrid automatic repeat request process based on an identifier that is of a logical channel group and that is sent by the terminal device, where an identifier of the first hybrid automatic repeat request process is the first hybrid automatic repeat request process identifier. In this way, the first hybrid automatic repeat request process identifier may be sent to the terminal device, so that the terminal device may transmit, in the first hybrid automatic repeat request process by using the first transmission mode, data of a logical channel corresponding to the terminal device.

In a possible implementation, the data transmission method may further include:
The network device sends second configuration information to the terminal device, where the second configuration information is used to indicate a transmission mode corresponding to at least one hybrid automatic repeat request process. Therefore, the terminal device may learn of the transmission mode corresponding to the at least one hybrid automatic repeat request process. In this way, after receiving the first hybrid automatic repeat request process identifier sent by the network device, the terminal device may determine, based on the first hybrid automatic repeat request process identifier and the transmission mode corresponding to the at least one hybrid automatic repeat request process, the first transmission mode corresponding to the first hybrid automatic repeat request process, and determine, based on the first transmission mode and a transmission mode corresponding to at least one logical channel, at least one logical channel using the first transmission mode.

In a possible implementation, the indication information includes the identifiers of the one or more logical channels. Further, the indication information includes the first hybrid automatic repeat request process identifier.

Further, optionally, the network device sends third configuration information to the terminal device, where the third configuration information is used to indicate a transmission mode corresponding to at least one hybrid automatic repeat request process. In this manner, the network device indicates, by using the indication information, the first transmission mode to the terminal device, and the first hybrid automatic repeat request process identified by the first hybrid automatic repeat request process identifier corresponds to the first transmission mode.

In a possible implementation, the first transmission mode includes at least two hybrid automatic repeat request modes, there are two hybrid automatic repeat request modes in the at least two hybrid automatic repeat request modes, and the two hybrid automatic repeat request modes meet at least one of the following:
maximum quantities of hybrid automatic repeat request retransmissions are different;
redundancy version numbers or redundancy version sequences are different;
modulation and coding schemes are different;
round-trip transmission latencies are different;
durations from receiving scheduling information or feedback information to performing data transmission or retransmission are different;
code block group transmission modes are different;
hybrid automatic repeat request feedback codebooks are different; and
hybrid automatic repeat request priorities are different.

According to a second aspect, an embodiment of this application further provides a data transmission method. The data transmission method includes:
A terminal device receives indication information sent by a network device; and
the terminal device determines a first transmission mode based on the indication information, where the first transmission mode includes: enabling a hybrid automatic repeat request function, disabling the hybrid automatic repeat request function, or at least one hybrid automatic repeat request mode. In this way, different transmission modes can be used based on requirements of different services, and therefore flexibility of data transmission is improved.

In a possible implementation, the indication information includes at least one of the first transmission mode, a first hybrid automatic repeat request process identifier, and identifiers of the one or more logical channels.

In a possible implementation, the indication information includes the first transmission mode, and the data transmission method may further include:
The terminal device determines at least one logical channel based on the first transmission mode; and
the terminal device transmits, in the first transmission mode, data of the at least one logical channel.

In a possible implementation, the data transmission method may further include:
The terminal device receives first configuration information sent by the network device, where the first configuration information is used to indicate a transmission mode corresponding to at least one logical channel. Therefore, the terminal device may learn of the transmission mode corresponding to the at least one logical channel. In this way, after receiving the first transmission mode sent by the network device, the terminal device may determine, based on the first transmission mode and the transmission mode corresponding to the at least one logical channel, at least one logical channel using the first transmission mode.

In a possible implementation, the indication information includes the first hybrid automatic repeat request process identifier, and the data transmission method may further include:
The terminal device determines at least one logical channel based on the first hybrid automatic repeat request process identifier; and
the terminal device transmits, in the first transmission mode, data of the at least one logical channel by using a first hybrid automatic repeat request process, where an identifier of the first hybrid automatic repeat request process is the first hybrid automatic repeat request process identifier.

In a possible implementation, the data transmission method may further include:
The terminal device receives second configuration information sent by the network device, where the second configuration information is used to indicate a transmission mode corresponding to at least one hybrid automatic repeat request process. Therefore, the terminal device may learn of the transmission mode corresponding to the at least one hybrid automatic repeat request process. In this way, after receiving the first hybrid automatic repeat request process identifier sent by the network device, the terminal device may determine, based on the first hybrid automatic repeat request process identifier and the transmission mode corresponding to the at least one hybrid automatic repeat request process, the first transmission mode corresponding to the first hybrid automatic repeat request process, and determine, based on the first transmission mode and a transmission mode corresponding to at least one logical channel, at least one logical channel using the first transmission mode.

In a possible implementation, the indication information includes the identifiers of the one or more logical channels. Further, the indication information includes the first hybrid automatic repeat request process identifier.

Further, optionally, the terminal device receives third configuration information from the network device, where the third configuration information is used to indicate a transmission mode corresponding to at least one hybrid automatic repeat request process. In this manner, the network device indicates, by using the indication information, the first transmission mode to the terminal device, and a first hybrid automatic repeat request process identified by the first hybrid automatic repeat request process identifier corresponds to the first transmission mode.

In a possible implementation, the first transmission mode includes at least two hybrid automatic repeat request modes, there are two hybrid automatic repeat request modes in the at least two hybrid automatic repeat request modes, and the two hybrid automatic repeat request modes meet at least one of the following:
maximum quantities of hybrid automatic repeat request retransmissions are different;
redundancy version numbers or redundancy version sequences are different;
modulation and coding schemes are different;
round-trip transmission latencies are different;
durations from receiving scheduling information or feedback information to performing data transmission or retransmission are different;
code block group transmission modes are different;
hybrid automatic repeat request feedback codebooks are different; and
hybrid automatic repeat request priorities are different.

According to a third aspect, an embodiment of this application further provides a communication apparatus. The communication apparatus may include:
a sending unit, configured to send indication information to a terminal device, where the indication information is used to indicate a first transmission mode, and the first transmission mode includes: enabling a hybrid automatic repeat request function, disabling the hybrid automatic repeat request function, or at least one hybrid automatic repeat request mode.

In a possible implementation, the indication information includes the first transmission mode or a first hybrid automatic repeat request process identifier.

In a possible implementation, the indication information includes the first transmission mode, and the communication apparatus may further include:
a processing unit, configured to determine the first transmission mode based on an identifier that is of a logical channel group and that is sent by the terminal device.

In a possible implementation, the sending unit is further configured to send first configuration information to the terminal device, where the first configuration information is used to indicate a transmission mode corresponding to at least one logical channel.

In a possible implementation, the indication information includes the first hybrid automatic repeat request process identifier; and
a processing unit is further configured to determine a first hybrid automatic repeat request process based on an identifier that is of a logical channel group and that is sent by the terminal device, where an identifier of the first hybrid automatic repeat request process is the first hybrid automatic repeat request process identifier.

In a possible implementation, the sending unit is further configured to send second configuration information to the terminal device, where the second configuration information is used to indicate a transmission mode corresponding to at least one hybrid automatic repeat request process.

In a possible implementation, the first transmission mode includes at least two hybrid automatic repeat request modes, there are two hybrid automatic repeat request modes in the at least two hybrid automatic repeat request modes, and the two hybrid automatic repeat request modes meet at least one of the following:
maximum quantities of hybrid automatic repeat request retransmissions are different;
redundancy version numbers or redundancy version sequences are different;
modulation and coding schemes are different;
round-trip transmission latencies are different;
durations from receiving scheduling information or feedback information to performing data transmission or retransmission are different;
code block group transmission modes are different;
hybrid automatic repeat request feedback codebooks are different; and
hybrid automatic repeat request priorities are different.

According to a fourth aspect, an embodiment of this application further provides a communication apparatus. The communication apparatus may include:
a receiving unit, configured to receive indication information sent by a network device; and
a processing unit, configured to determine a first transmission mode based on the indication information, where the first transmission mode includes: enabling a hybrid automatic repeat request function, disabling the hybrid automatic repeat request function, or at least one hybrid automatic repeat request mode.

In a possible implementation, the indication information includes the first transmission mode or a first hybrid automatic repeat request process identifier.

In a possible implementation, the indication information includes the first transmission mode; and
the processing unit is further configured to: determine at least one logical channel based on the first transmission mode; and transmit, in the first transmission mode, data of the at least one logical channel.

In a possible implementation, the receiving unit is further configured to receive first configuration information sent by the network device, where the first configuration information is used to indicate a transmission mode corresponding to at least one logical channel.

In a possible implementation, the indication information includes the first hybrid automatic repeat request process identifier; and
the processing unit is further configured to: determine at least one logical channel based on the first hybrid automatic repeat request process identifier; and transmit, in the first transmission mode, data of the at least one logical channel by using a first hybrid automatic repeat request process, where an identifier of the first hybrid automatic repeat request process is the first hybrid automatic repeat request process identifier.

In a possible implementation, the receiving unit is further configured to receive second configuration information sent by the network device, where the second configuration information is used to indicate a transmission mode corresponding to at least one hybrid automatic repeat request process.

In a possible implementation, the first transmission mode includes at least two hybrid automatic repeat request modes, there are two hybrid automatic repeat request modes in the at least two hybrid automatic repeat request modes, and the two hybrid automatic repeat request modes meet at least one of the following:
maximum quantities of hybrid automatic repeat request retransmissions are different;
redundancy version numbers or redundancy version sequences are different;
modulation and coding schemes are different;
round-trip transmission latencies are different;
durations from receiving scheduling information or feedback information to performing data transmission or retransmission are different;
code block group transmission modes are different;
hybrid automatic repeat request feedback codebooks are different; and
hybrid automatic repeat request priorities are different.

According to a fifth aspect, an embodiment of this application further provides a communication apparatus. The communication apparatus may include a processor and a memory.

The memory is configured to store program instructions.

The processor is configured to: read the program instructions in the memory, and perform, based on the program instructions in the memory, the data transmission method according to any one of the first aspect or the possible implementations of the first aspect.

According to a sixth aspect, an embodiment of this application further provides a communication apparatus. The communication apparatus may include a processor and a memory.

The memory is configured to store program instructions.

The processor is configured to: read the program instructions in the memory, and perform, based on the program instructions in the memory, the data transmission method according to any one of the second aspect or the possible implementations of the second aspect.

According to a seventh aspect, an embodiment of this application further provides a computer storage medium, including instructions. When the instructions are run on one or more processors, a communication apparatus is enabled to perform the data transmission method according to any one of the first aspect or the possible implementations of the first aspect or the data transmission method according to any one of the second aspect or the possible implementations of the second aspect.

According to an eighth aspect, an embodiment of this application further provides a chip, where the chip stores a computer program. When the computer program is executed by a processor, the data transmission method according to any one of the first aspect or the possible implementations of the first aspect or the data transmission method according to any one of the second aspect or the possible implementations of the second aspect is performed.

According to the data transmission method and the communication apparatus provided in the embodiments of this application, the network device sends the indication information to the terminal device, where the indication information is used to indicate the first transmission mode, and the first transmission mode includes: enabling the hybrid automatic repeat request function, disabling the hybrid automatic repeat request function, or at least one hybrid automatic repeat request mode. Therefore, the terminal device receives the indication information, and determines the first transmission mode based on the indication information. Specifically, the terminal device enables the hybrid automatic repeat request function, disables the hybrid automatic repeat request function, or uses one or more of the at least one hybrid automatic repeat request mode, and performs data transmission. In this way, different transmission modes can be used based on requirements of different services, and therefore flexibility of data transmission is improved.

### BRIEF DESCRIPTION OF DRAWINGS

FIG. 1 is a schematic diagram of an architecture of a system according to an embodiment of this application;
FIG. 2 is a schematic flowchart of a data transmission method according to an embodiment of this application;
FIG. 3 is a schematic flowchart of another data transmission method according to an embodiment of this application;
FIG. 4 is a schematic diagram of logical channels and uplink resources according to an embodiment of this application;
FIG. 5 is another schematic diagram of logical channels and uplink resources according to an embodiment of this application;
FIG. 6 is a schematic flowchart of still another data transmission method according to an embodiment of this application;
FIG. 7 is a schematic structural diagram of a network device according to an embodiment of this application;
FIG. 8 is a schematic structural diagram of a terminal device according to an embodiment of this application;
FIG. 9 is a schematic structural diagram of another network device according to an embodiment of this application; and
FIG. 10 is a schematic structural diagram of another terminal device according to an embodiment of this application.

### DETAILED DESCRIPTION OF EMBODIMENTS

The following describes technical solutions in this application with reference to the accompanying drawings.

It should be understood that the technical solutions in embodiments of this application may be used for a long term evolution (Long Term Evolution, LTE) architecture, or may be used for a universal mobile telecommunications system (Universal Mobile Telecommunications System, UMTS) terrestrial radio access network (UMTS Terrestrial Radio Access Network, UTRAN) architecture, or a global system for mobile communications (Global System for Mobile Communication, GSM)/enhanced data rates for GSM evolution (Enhanced Data Rate for GSM Evolution, EDGE) system radio access network (GSM EDGE Radio Access Network, GERAN) architecture. In the UTRAN architecture or the GERAN architecture, a function of an MME is completed by a serving general packet radio service (General Packet Radio Service, GPRS) support node (Serving GPRS Support, SGSN), and a function of an SGW/a PGW is completed by a gateway GPRS support node (Gateway GPRS Support Node, GGSN). The technical solutions in the embodiments of this application may be further applied to another communication system, such as a public land mobile network (Public Land Mobile Network, PLMN) system, or even a future 5G communication system or a communication system after 5G. This is not limited in the embodiments of this application.

A terminal device is provided in the embodiments of this application. The terminal device is also referred to as a terminal, and may be a device that includes a wireless transceiver function and that can cooperate with a network device to provide a communication service for a user. Specifically, the terminal may be user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. For example, the terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, or a terminal device in a future 5G network or a network after 5G. This is not limited in the embodiments of this application.

A network device is further provided in the embodiments of this application. The network device may be a device configured to communicate with a terminal device. For example, the network device may be a base transceiver station (Base Transceiver Station, BTS) in a GSM system or a CDMA system, may be a NodeB (NodeB, NB) in a WCDMA system, or may be an evolved NodeB (Evolutional NodeB, eNB or eNodeB) in an LTE system. Alternatively, the network device may be a relay station, an access point, a vehicle-mounted device, a wearable device, a network-side device in a future 5G network or a network after 5G, a network device in a future evolved PLMN network, or the like.

The network device in the embodiments of this application may also be referred to as a radio access network (Radio Access Network, RAN) device. The RAN device is connected to a terminal, to receive data from the terminal and send the data to a core network device. The RAN device corresponds to different devices in different communication systems, for example, corresponds to a base station and a base station controller in a 2G system, corresponds to a base station and a radio network controller (Radio Network Controller, RNC) in a 3G system, corresponds to an evolved NodeB (Evolutional NodeB, eNB) in a 4G system, and corresponds to an access network device (for example, a gNB, a CU, or a DU) in a 5G system such as a new radio access system (New Radio Access Technology, NR).

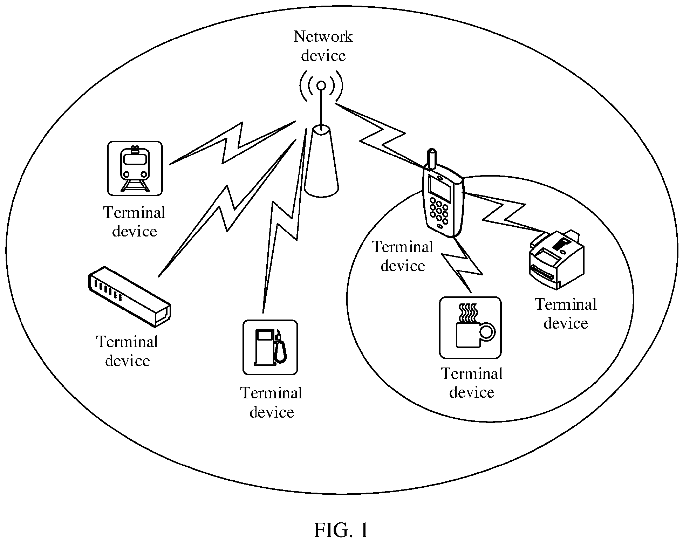

FIG. 1 is a schematic diagram of an architecture of a system according to an embodiment of this application. The communication system may include a network device and at least one terminal device, and the network device may exchange data with the terminal device. When the network device schedules services, there are a plurality of services with different transmission requirements. Therefore, although HARQ can be used to improve reliability of data transmission, a feedback-retransmission mechanism of the HARQ also causes a transmission latency. Consequently, an existing transmission method is simple, and data transmission cannot be performed based on requirements of different services. In this way, flexibility of data transmission is not high.

To perform transmission based on requirements of different services, so as to improve flexibility of data transmission, the embodiments of this application provide a data transmission method. The method includes:
A network device sends indication information to a terminal device, where the indication information is used to indicate a first transmission mode, and the first transmission mode includes: enabling a hybrid automatic repeat request function, disabling the hybrid automatic repeat request function, or at least one hybrid automatic repeat request mode. The first transmission mode may be one first transmission mode or a plurality of first transmission modes, and the plurality of first transmission modes may be different first transmission modes.

Optionally, the network device further determines a first uplink resource. The first transmission mode corresponds to the first uplink resource. The first uplink resource is configured by the network device for the terminal device.

Optionally, the network device determines the first transmission mode.

The terminal device receives the indication information, and determines the first transmission mode based on the indication information. Specifically, the terminal device enables the hybrid automatic repeat request function, disables the hybrid automatic repeat request function, or uses one or more of the at least one hybrid automatic repeat request mode, and performs data transmission. Optionally, the terminal device performs the data transmission on the first uplink resource. In this way, different transmission modes can be used based on requirements of different services, and therefore flexibility of data transmission is improved.

It should be noted that in this embodiment of this application, the network device may send, to the terminal device in the following possible implementations, the indication information used to indicate the first transmission mode. In a possible implementation, the indication information may include the first transmission mode. To be specific, the network device may directly include the first transmission mode in the indication information and send the indication information to the terminal device, so that the terminal device may directly perform data transmission in the first transmission mode included in the indication information. In another possible implementation, the indication information may include a first hybrid automatic repeat request process identifier. To be specific, the network device may include the first hybrid automatic repeat request process identifier in the indication information. Because there is a mapping relationship between a hybrid automatic repeat request process and a transmission mode, the terminal device may determine the first transmission mode based on the received first hybrid automatic repeat request process identifier and the mapping relationship between a hybrid automatic repeat request process and a transmission mode, and perform data transmission in the first transmission mode, so that data transmission is performed in different transmission modes based on requirements of different services, and therefore flexibility of data transmission is improved. The first hybrid automatic repeat request process identifier may be one or more different first hybrid automatic repeat request process identifiers.

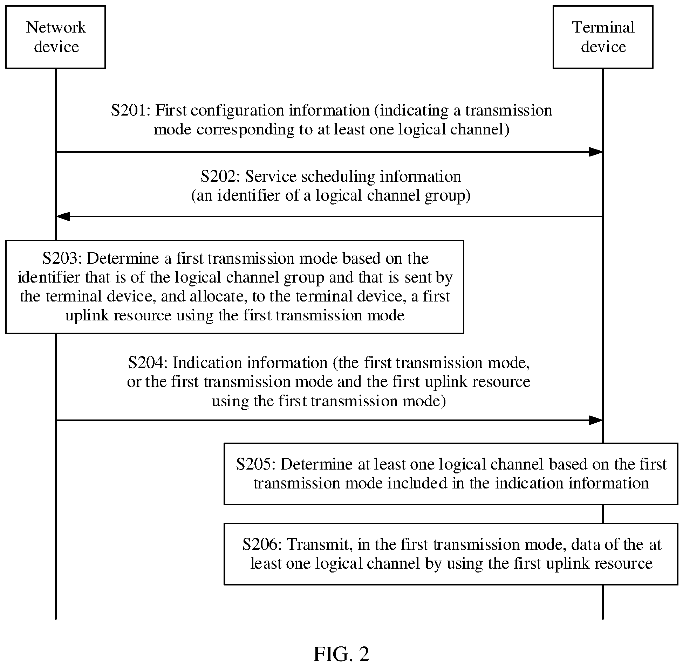

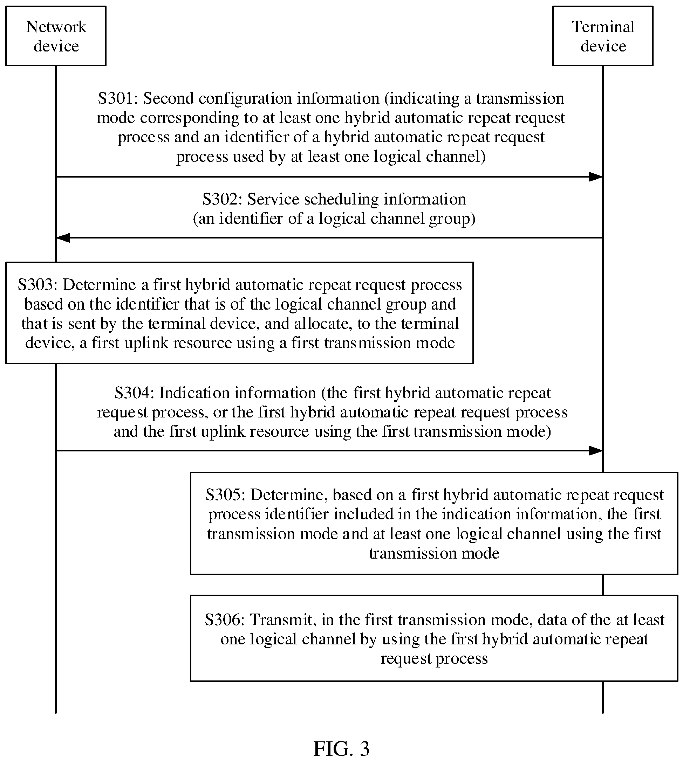

Before technical solutions corresponding to the two possible implementations are described in detail, several concepts in the embodiments of this application are first described. In the embodiments of this application, when the indication information is used to indicate a transmission mode, there are three related transmission modes, and the three transmission modes are enabling the hybrid automatic repeat request function, disabling the hybrid automatic repeat request function, or at least one hybrid automatic repeat request mode. Enabling the hybrid automatic repeat request function may be understood as using the hybrid automatic repeat request function in a data transmission process. When a service scheduled by the terminal device is a service that has a reliability requirement, a transmission mode indicated by the indication information may be enabling the hybrid automatic repeat request function, so that the hybrid automatic repeat request function is used for transmission on an uplink resource, and therefore reliability of transmission of the service is improved. Disabling the hybrid automatic repeat request function may be understood as not using the hybrid automatic repeat request function in a data transmission process. When a service scheduled by the terminal device is a service that has a latency requirement, a transmission mode indicated by the indication information may be disabling the hybrid automatic repeat request function, so that transmission is performed on an uplink resource without using the hybrid automatic repeat request function, and therefore a latency caused in a transmission process of the service is reduced. The at least one hybrid automatic repeat request mode may be understood as at least one level of hybrid automatic repeat request mode corresponding to a hybrid automatic repeat request function when the hybrid automatic repeat request function is used in a data transmission process. To be specific, one level of hybrid automatic repeat request mode may be used, or two or more different levels of hybrid automatic repeat request modes may be used. When services scheduled by the terminal device are services having different reliability requirements, a transmission mode indicated by the indication information may be the at least one hybrid automatic repeat request mode, so that scheduling is performed on uplink resources using different levels of hybrid automatic repeat request functions, and therefore reliability of transmission of different services is improved. In this transmission mode, optionally, the at least one hybrid automatic repeat request mode indicates to enable the hybrid automatic repeat request function, or implicitly indicates to enable the hybrid automatic repeat request function. Still optionally, the indication information or other information may further include an indication for enabling the hybrid automatic repeat request function. Optionally, there are at least two hybrid automatic repeat request modes in the at least one hybrid automatic repeat request mode, and the at least two hybrid automatic repeat request modes meet at least one of the following: maximum quantities of hybrid automatic repeat request retransmissions are different; redundancy version numbers or redundancy version sequences are different; modulation and coding schemes are different; round-trip transmission latencies are different; durations from receiving scheduling information or feedback information (for example, an ACK message or a NACK message) to performing data transmission or retransmission are different; code block group transmission modes are different; hybrid automatic repeat request feedback codebooks are different; and hybrid automatic repeat request priorities are different. The following clearly and completely describes, by using embodiments shown in FIG. 2 and FIG. 3, the two possible implementations corresponding to the indication information. When the indication information includes the first transmission mode, refer to FIG. 2. FIG. 2 is a schematic flowchart of a data transmission method according to an embodiment of this application. When the indication information includes the first hybrid automatic repeat request process identifier, refer to FIG. 3. FIG. 3 is a schematic flowchart of another data transmission method according to an embodiment of this application.

In a possible implementation, when the indication information includes the first transmission mode, for example, referring to FIG. 2, a network device in FIG. 2 may correspond to the network device shown in FIG. 1, and a terminal device in FIG. 2 may correspond to the terminal device shown in FIG. 1.

Optionally, the data transmission method may include S201: The network device sends first configuration information to the terminal device.

The first configuration information is used to indicate a transmission mode corresponding to at least one logical channel, that is, a transmission mode corresponding to each of the at least one logical channel, and the at least one logical channel is one or more logical channels configured by the network device for the terminal device. For example, a quantity of the at least one logical channel may be one or more, for example, two. The quantity is specifically set based on an actual requirement. Herein, the quantity of the at least one logical channel is not further limited in this embodiment of this application. It should be noted that, in this embodiment of this application, the transmission mode that corresponds to the at least one logical channel and that is indicated by the first configuration information may be understood as a transmission mode that is allowed to be used when data of a logical channel of the at least one logical channel is transmitted, or may be understood as a mapping relationship between each of the at least one logical channel and a transmission mode. Specifically, the first configuration information indicates a corresponding transmission mode for each of the at least one logical channel. Optionally, at least two logical channels in the at least one logical channel correspond to one or more same transmission modes. Still optionally, each of the at least one logical channel corresponds to a different transmission mode.

For example, when the network device sends the first configuration information to the terminal device, the first configuration information may be carried in radio resource control (Radio Resource Control, RRC) signaling, or may be carried in signaling used to configure the logical channel. When the first configuration information is carried in the RRC signaling or the signaling used to configure the logical channel, the first configuration information may include at least one parameter, and a value corresponding to the at least one parameter or a combination of values corresponding to the at least one parameter indicates a transmission mode that is allowed to be used for data of each logical channel. Herein, this embodiment of this application uses only an example in which the first configuration information may be carried in the RRC signaling or the signaling for configuring the logical channel for description. However, it does not mean that this embodiment of this application is limited thereto.

In S201, the network device sends, to the terminal device, the first configuration information used to indicate the transmission mode corresponding to the at least one logical channel. The terminal device receives the first configuration information, and determines the transmission mode corresponding to the at least one logical channel. In this way, after receiving the indication information that is sent by the network device and that includes the first transmission mode, the terminal device may determine, based on an allowed transmission mode (or an available transmission mode) or based on the mapping relationship between a logical channel and a transmission mode, the transmission mode corresponding to each of the at least one logical channel, and transmit, in the transmission mode corresponding to each logical channel, data of the logical channel.

Optionally, the data transmission method may include S202: The terminal device sends a service scheduling request message to the network device.

The service scheduling request message includes an identifier of a logical channel group having to-be-sent data. The logical channel group includes one or more logical channels. The logical channel group may also be replaced with a logical channel. In a possible implementation, when the logical channel group includes only one logical channel, the service scheduling request message includes an identifier of the logical channel having to-be-sent data. In another possible implementation, when the logical channel group includes a plurality of logical channels, the service scheduling request message includes identifiers of the plurality of logical channels having to-be-sent data.

It should be noted herein that, when the terminal device is to schedule data, the terminal device maps the to-be-sent data to the one or more logical channels, or allocates the to-be-sent data to the one or more logical channels. In this case, the one or more logical channels have the to-be-sent data. In this case, one or more logical channel groups to which the one or more logical channels belong may be understood as the "logical channel group having the to-be-sent data". It should be noted that, in the logical channels included in the "logical channel group having the to-be-sent data", to-be-sent data may exist on only a part of the logical channels. The explanation herein is also applicable to a "logical channel group having to-be-sent data" that appears in the following. For ease of description, the foregoing to-be-sent data is data of one or more logical channels below.

For example, when the terminal device sends the service scheduling request message to the network device, the service scheduling request message may be a scheduling request (Scheduling Request, SR), or may be a buffer status report (Buffer Status Report, BSR). Herein, this embodiment of this application uses only an example in which the service scheduling request message may be the SR or the BSR for description. However, it does not mean that this embodiment of this application is limited thereto. For meanings of the SR and the BSR, refer to explanations in a current technology. It should be noted herein that the service scheduling request message may also be service scheduling request information, and may be carried in a message or an information element (information element, IE).

In a service scheduling process, when the terminal device needs to transmit an uplink service, the terminal device determines a logical channel used to transmit data of the uplink service, and sends, to the network device, a service scheduling request message including an identifier of a logical channel group in which the logical channel is located. The network device receives the service scheduling request message including the identifier of the logical channel group, and performs one or more of the following S203 and S204.

S203: The network device determines the first transmission mode based on the identifier that is of the logical channel group and that is sent by the terminal device. The identifier of the logical channel group may be identifiers of one or more logical channel groups. The one or more logical channel groups identified by the identifiers of the one or more logical channel groups may correspond to one or more different first transmission modes.

The first transmission mode corresponds to a first uplink resource. The uplink resource is a UL grant, the UL grant may be a dynamic uplink resource or a configured uplink resource (a semi-persistent scheduling resource or a grant-free uplink resource), and the uplink resource and the first transmission mode may be indicated to the terminal device together (or sent to the terminal device together) by using the first configuration information, or indicated (or sent) to the terminal device in a manner different from being indicated by the first configuration information. For example, the uplink resource may be configured for the terminal device before the terminal device sends the service scheduling request information. When there are a plurality of different first transmission modes, the plurality of different first transmission modes may correspond to a same first uplink resource or a plurality of different first uplink resources. This is not specifically limited herein.

In this embodiment of this application, the network device preconfigures the transmission mode corresponding to the at least one logical channel, that is, the transmission mode that is allowed to be used when the data of the logical channel of the at least one logical channel is transmitted. After receiving the identifier that is of the logical channel group and that is sent by the terminal device, the network device may determine, based on the identifier of the logical channel group and the transmission mode that is allowed to be used, the first transmission mode corresponding to the identifier of the logical channel. It should be noted that, in this embodiment of this application, the first uplink resource and the first transmission mode may be indicated to the terminal device together by using the indication information, or may be separately indicated or sent to the terminal device. If the first uplink resource using the first transmission mode is not preconfigured for the terminal device, the first uplink resource using the first transmission mode needs to be further allocated to the terminal device based on the first transmission mode, so that the first transmission mode is determined and the first uplink resource corresponding to the first transmission mode is allocated to the terminal device. A transmission mode that is allowed to be used by an uplink resource may be understood as that there is a mapping relationship between the uplink resource and the transmission mode. On the contrary, if the first uplink resource using the first transmission mode is preconfigured for the terminal device, there is no need to further determine herein the first uplink resource using the first transmission mode. For example, the first uplink resource is configured for the terminal device, and the first uplink resource may be configured for the terminal device before the terminal device sends the service scheduling request information. Further, optionally, when configuring the first uplink resource for the terminal device or after configuring the first uplink resource, the network device configures the first transmission mode corresponding to the first uplink resource for the terminal device. In this way, when a service arrives, the terminal device may directly transmit data on the first uplink resource in the first transmission mode.

Optionally, the network device determines the first transmission mode, and sends, to the terminal device, the indication information including or indicating the first transmission mode, or the network device sends, to the terminal device, the indication information including or indicating the first transmission mode and the first uplink resource, that is, performs the following S204.

S204: The network device sends the indication information to the terminal device.

The indication information includes the first transmission mode, where the first transmission mode includes: enabling a hybrid automatic repeat request function, disabling the hybrid automatic repeat request function, or at least one hybrid automatic repeat request mode. Optionally, the indication information may further include the first uplink resource corresponding to the first transmission mode.

For example, when the network device sends the indication information to the terminal device, the indication information may be carried in downlink control information (Downlink Control Information, DCI). Herein, this embodiment of this application uses only an example in which the indication information may be carried in the DCI for description. However, it does not mean that this embodiment of this application is limited thereto. When the indication information is carried in the DCI, the indication information is learned of by a physical layer, and the physical layer needs to deliver the indication information to a MAC layer.

The network device sends, to the terminal device, the indication information including the first transmission mode, or sends, to the terminal device, the indication information including the first transmission mode and the first uplink resource using the first transmission mode, so that the terminal device receives the indication information, and performs the following S205 and S206.

S205: The terminal device determines at least one logical channel based on the first transmission mode included in the indication information.

The first transmission mode includes: enabling the hybrid automatic repeat request function, disabling the hybrid automatic repeat request function, or at least one hybrid automatic repeat request mode.

In S201, the network device sends the first configuration information to the terminal device, so that the terminal device determines, based on the first configuration information, the transmission mode corresponding to the at least one logical channel, that is, the transmission mode that is allowed to be used when the data of the logical channel of the at least one logical channel is transmitted. Therefore, the terminal device may determine at least one logical channel that meets a first condition. The first condition may be understood as that the transmission mode that is allowed to be used when the data of the logical channel is transmitted includes the first transmission mode, so that at least one logical channel using the first transmission mode is determined. It should be noted that the at least one logical channel that meets the first condition is one or more logical channels on which data is transmitted in the first transmission mode.

After the at least one logical channel using the first transmission mode is determined based on the first transmission mode included in the indication information and the transmission mode that is allowed to be used by the data of the logical channel, data of the at least one logical channel may be transmitted on the first uplink resource in the first transmission mode, that is, the following S206 is performed.

S206: The terminal device transmits, in the first transmission mode, the data of the at least one logical channel by using the first uplink resource.

After determining the at least one logical channel using the first transmission mode, the data of the at least one logical channel may be transmitted by using the first uplink resource.

It should be noted that, in this embodiment of this application, when data of at least one logical channel is transmitted, if the at least one logical channel includes a plurality of logical channels, and at least two of the plurality of logical channels have different priorities, it indicates that data of the at least two logical channels corresponds to different transmission priorities. A higher priority of a logical channel indicates a higher transmission priority corresponding to data of the logical channel. During specific implementation, the terminal device may perform logical channel prioritization (Logical channel prioritization, LCP) based on priorities of logical channels. First, data of a logical channel with a higher priority is placed in a packet, and then data of a logical channel with a lower priority is placed in the packet. Packet processing is performed on data of at least one logical channel, so that data with a higher priority is first transmitted in a data transmission process.

Optionally, if the first transmission mode is enabling the hybrid automatic repeat request function, the terminal device transmits an encapsulated data packet on the first uplink resource based on the first uplink resource, includes the encapsulated data packet in a HARQ buffer, and allocates a hybrid automatic repeat request process number to the encapsulated data packet.

Optionally, if the first transmission mode is disabling the hybrid automatic repeat request function, the terminal device may directly transmit an encapsulated data packet on the first uplink resource.

In the technical solution shown in this embodiment, that the first uplink resource using the first transmission mode is not separately preconfigured for the terminal device is used as an example. The network device sends, to the terminal device, the first configuration information used to indicate the transmission mode corresponding to the at least one logical channel, so that the terminal device may learn of the transmission mode corresponding to each of the at least one logical channel. In this way, when the terminal device needs to transmit the uplink service, the terminal device sends, to the network device, the service scheduling request message including the identifier of the logical channel group. Therefore, the network device may determine, based on the identifier of the logical channel group in the service scheduling request message and the transmission mode that is allowed to be used, the first transmission mode corresponding to the identifier of the logical channel; further allocate, to the terminal device based on the first transmission mode and the transmission mode that is allowed to be used by the uplink resource, the first uplink resource using the first transmission mode; and send, to the terminal device, the indication information including the first transmission mode and the first uplink resource using the first transmission mode. Therefore, the terminal device may determine, based on the first transmission mode included in the indication information, and the transmission mode that is allowed to be used when the data of the logical channel is transmitted, the at least one logical channel using the transmission mode; perform packet processing on the data of the at least one logical channel; and transmit, on the first uplink resource, the data that is on the at least one logical channel and that is obtained after the packet processing. It can be learned that according to the data transmission method provided in this embodiment of this application, the network device may allocate, to the service based on the service scheduling request message, the transmission mode corresponding to the service, include the first transmission mode in the indication information, and send the indication information to the terminal device, so that the terminal device may transmit data in the first transmission mode. In this way, data transmission can be performed in different transmission modes based on requirements of different services, and therefore flexibility of data transmission is improved.

It should be noted that in a process of determining the logical channel, determining based on the allowed transmission mode may be used as only one of selection conditions. This application is not limited thereto; and in selection and determining of the logical channel, the logical channel may be determined based on another condition and the condition in this application. In other words, it is assumed that a logical channel meets the condition of the allowed transmission mode. In this case, data of the logical channel may not be transmitted on a related resource because another condition is not met.

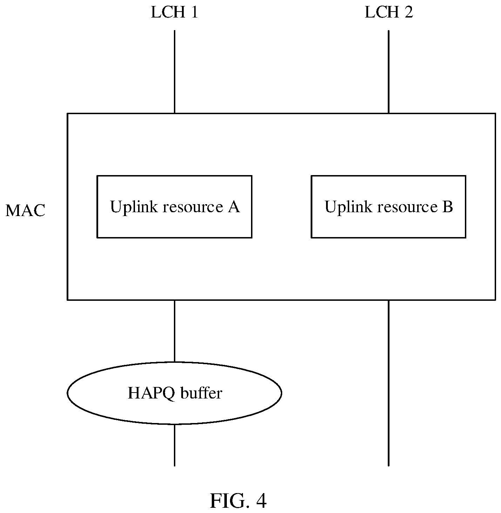

For example, in a possible scenario, refer to FIG. 4. FIG. 4 is a schematic diagram of logical channels and uplink resources according to an embodiment of this application. That a processing manner configured for a logical channel 1 (LCH 1) in S201 is enabling the hybrid automatic repeat request function, and a processing manner configured for a logical channel 2 (LCH 2) in S201 is disabling the hybrid automatic repeat request function is used as an example. When the terminal device needs to transmit a service, and needs to perform transmission on the logical channel 1 and the logical channel 2, the terminal device sends, to the network device, a service scheduling request message including an identifier of the logical channel 1 and an identifier of the logical channel 2. Therefore, the network device may determine, based on the identifier of the logical channel 1, the identifier of the logical channel 2, that a transmission mode that is allowed to be used when data of the logical channel 1 is transmitted is enabling the hybrid automatic repeat request function, and that a transmission mode that is allowed to be used when data of the logical channel 2 is transmitted is disabling the hybrid automatic repeat request function, that a transmission mode used by the data transmitted on the logical channel 1 is enabling the hybrid automatic repeat request function and a transmission mode used by the data transmitted on the logical channel 2 is disabling the hybrid automatic repeat request function; and further determine, based on a transmission mode that is allowed to be used by an uplink resource and that is configured by the network device, uplink resources respectively corresponding to the logical channel 1 and the logical channel 2. If an uplink resource A configured by the network device is used to transmit a service for which the hybrid automatic repeat request function is enabled, and an uplink resource B is used to transmit a service for which the hybrid automatic repeat request function is disabled, it may be determined that a transmission mode corresponding to the uplink resource A is enabling the hybrid automatic repeat request function, and a transmission mode corresponding to the uplink resource B is disabling the hybrid automatic repeat request function. The uplink resource A and the corresponding transmission mode of enabling the hybrid automatic repeat request function are sent to the terminal device by using indication information, and the uplink resource B and the corresponding transmission mode of disabling the hybrid automatic repeat request function are sent to the terminal device by using the indication information. Therefore, the terminal device may determine, based on the corresponding transmission mode that is of enabling the hybrid automatic repeat request function and that is of the uplink resource A, the corresponding transmission mode that is of disabling the hybrid automatic repeat request function and that is of the uplink resource B, that the preconfigured transmission mode that is allowed to be used when the data of the logical channel 1 is transmitted is enabling the hybrid automatic repeat request function, and that the preconfigured transmission mode that is allowed to be used when the data of the logical channel 2 is transmitted is disabling the hybrid automatic repeat request function, that the data of the logical channel 1 is transmitted on the uplink resource A and the data of the logical channel 2 is transmitted on the uplink resource B. In this way, data transmission can be performed in different transmission modes based on requirements of different services, and therefore flexibility of data transmission is improved.

The foregoing embodiment shown in FIG. 2 describes in detail a technical solution of how to perform data transmission when the indication information includes the first transmission mode. The following describes in detail a technical solution of how to perform data transmission when the indication information includes the first hybrid automatic repeat request process identifier.

In another possible implementation, when the indication information includes the first hybrid automatic repeat request process identifier, for example, referring to FIG. 3, a network device in FIG. 3 may correspond to the network device shown in FIG. 1, and a terminal device in FIG. 3 may correspond to the terminal device shown in FIG. 1.

Optionally, the data transmission method may include S301: The network device sends second configuration information to the terminal device.

The second configuration information is used to indicate a transmission mode corresponding to at least one hybrid automatic repeat request process, that is, a transmission mode corresponding to each of the at least one hybrid automatic repeat request process. For example, a quantity of the at least one hybrid automatic repeat request process may be one or more, for example, two. The quantity is specifically set based on an actual requirement. Herein, the quantity of the at least one hybrid automatic repeat request process is not further limited in this embodiment of this application. It should be noted that, in this embodiment of this application, the transmission mode that corresponds to the at least one hybrid automatic repeat request process and that is indicated by the second configuration information may be understood as a transmission mode that is allowed to be used when data is transmitted in a hybrid automatic repeat request process of the at least one hybrid automatic repeat request process, or may be understood as a mapping relationship between each of the at least one hybrid automatic repeat request process and a transmission mode. Specifically, the second configuration information indicates a corresponding transmission mode for each of the at least one hybrid automatic repeat request process. Optionally, at least two hybrid automatic repeat request processes in the at least one hybrid automatic repeat request process correspond to one or more same transmission modes. Still optionally, each of the at least one hybrid automatic repeat request process corresponds to a different transmission mode.

Optionally, the second configuration information may also be used to indicate a hybrid automatic repeat request process used by at least one logical channel, and the at least one logical channel is one or more logical channels configured by the network device for the terminal device. The hybrid automatic repeat request process used by the at least one logical channel may be understood as a hybrid automatic repeat request process that is allowed to be used when data of a logical channel of the at least one logical channel is transmitted, or may be understood as a mapping relationship between each of the at least one logical channel and a hybrid automatic repeat request process. Specifically, the second configuration information may indicate the hybrid automatic repeat request process used by the at least one logical channel by using a hybrid automatic repeat request process identifier.

It should be noted that when the second configuration information is used to indicate the transmission mode corresponding to the at least one hybrid automatic repeat request process and the hybrid automatic repeat request process used by the at least one logical channel, the two mapping relationships may be sent to the terminal device by using a same piece of second configuration information, or may be sent to the terminal device by using two different pieces of configuration information, so that the terminal device can learn of the two relationships. In addition, it should be emphasized that, in this embodiment of this application, when the network device sends the second configuration information to the terminal device, if the terminal device already preconfigures any one of the two mapping relationships, that is, any one of the transmission mode that is allowed to be used when the data is transmitted in the hybrid automatic repeat request process of the at least one hybrid automatic repeat request process and the hybrid automatic repeat request process that is allowed to be used when the data of the logical channel is transmitted, the network device may send, to the terminal device, only the other mapping relationship that is in the two mapping relationships and that is not learned of by the terminal device. For example, if the terminal device already preconfigures the hybrid automatic repeat request process that is allowed to be used when the data of the logical channel is transmitted, the network device needs to send, to the terminal device, only the second configuration information indicating the transmission mode that is allowed to be used when the data is transmitted in the hybrid automatic repeat request process.

For example, when the network device sends the second configuration information to the terminal device, the second configuration information may be carried in radio resource control (Radio Resource Control, RRC) signaling, for example, may be carried in signaling used to configure the logical channel. Certainly, the second configuration information may alternatively be carried in DCI or a medium access control control element (Medium Access Control Control Element, MAC CE). Herein, this embodiment of this application uses only an example in which the second configuration information may be carried in the foregoing four types of signaling for description. However, it does not mean that this embodiment of this application is limited thereto.

In S301, the network device sends, to the terminal device, the second configuration information used to indicate the transmission mode that is allowed to be used when the data is transmitted in the hybrid automatic repeat request process and the hybrid automatic repeat request process that is allowed to be used when the data of the logical channel is transmitted. The terminal device receives the second configuration information; determines, based on the first hybrid automatic repeat request process identifier, the transmission mode (or referred to as an available transmission mode) that is allowed to be used when the data is transmitted in the hybrid automatic repeat request process, and the hybrid automatic repeat request process that is allowed to be used when the data of the logical channel is transmitted, at least one logical channel using the first transmission mode; and transmits, in a first hybrid automatic repeat request process, data of the at least one logical channel using the first transmission mode.

Optionally, the data transmission method may include S302: The terminal device sends a service scheduling request message to the network device.

The service scheduling request message includes an identifier of a logical channel group having to-be-sent data. The logical channel group includes one or more logical channels.

For example, when the terminal device sends the service scheduling request message to the network device, the service scheduling request message may be a scheduling request (Scheduling Request, SR), or may be a buffer status report (Buffer Status Report, BSR). Herein, this embodiment of this application uses only an example in which the service scheduling request message may be the SR or the BSR for description. However, it does not mean that this embodiment of this application is limited thereto. For meanings of the SR and the BSR, refer to explanations in a current technology.

In a service scheduling process, when the terminal device needs to transmit an uplink service, the terminal device first determines a logical channel used to transmit data of the uplink service, and sends, to the network device, a service scheduling request message including an identifier of a logical channel group in which the logical channel is located. The network device receives the service scheduling request message including the identifier of the logical channel group, and performs one or more of the following S303 and S304.

S303: The network device determines the first hybrid automatic repeat request process based on the identifier that is of the logical channel group and that is sent by the terminal device.

The first hybrid automatic repeat request process corresponds to the first transmission mode, and the first transmission mode corresponds to a first uplink resource.

The uplink resource is a UL grant, the UL grant may be a dynamic uplink resource or a configured uplink resource (a semi-persistent scheduling resource or a grant-free uplink resource), and the uplink resource and the first transmission mode may be indicated to the terminal device together (or sent to the terminal device together) by using the second configuration information, or indicated (or sent) to the terminal device in a manner different from being indicated by the first configuration information. For example, the uplink resource may be configured for the terminal device before the terminal device sends the service scheduling request information.

In this embodiment of this application, the network device preconfigures the transmission mode (or referred to as an available transmission mode) that is allowed to be used when the data is transmitted in the hybrid automatic repeat request process and the hybrid automatic repeat request process that is allowed to be used when the data of the logical channel is transmitted. After receiving the identifier that is of the logical channel group and that is sent by the terminal device, the network device may determine, based on the identifier of the logical channel group and the hybrid automatic repeat request process that is allowed to be used when the data of the logical channel is transmitted, the first hybrid automatic repeat request process corresponding to an identifier of a logical channel. It should be noted that, in this embodiment of this application, the first uplink resource and the first hybrid automatic repeat request process identifier may be indicated to the terminal device together by using the indication information, or may be separately indicated or sent to the terminal device. If the first uplink resource using the first transmission mode is not preconfigured for the terminal device, the first transmission mode corresponding to the first hybrid automatic repeat request process needs to be further determined based on the first hybrid automatic repeat request process identifier and the transmission mode that is allowed to be used when the data is transmitted in the hybrid automatic repeat request process, and the first uplink resource using the first transmission mode needs to be allocated to the terminal device based on the first transmission mode, so that the first hybrid automatic repeat request process is determined and the first uplink resource corresponding to the first transmission mode is allocated to the terminal device. On the contrary, if the first uplink resource using the first transmission mode is preconfigured for the terminal device, there is no need to further determine herein the first uplink resource using the first transmission mode. For example, when the first uplink resource is configured for the terminal device, the first uplink resource may be configured for the terminal device before the terminal device sends the service scheduling request information. Further, optionally, when configuring the first uplink resource for the terminal device or after configuring the first uplink resource, the network device configures the first transmission mode corresponding to the first uplink resource for the terminal device. In this way, when a service arrives, the terminal device may directly transmit data on the first uplink resource in the first transmission mode.

Optionally, the network device determines the first hybrid automatic repeat request process, and sends, to the terminal device, the indication information including or indicating the first hybrid automatic repeat request process, or the network device sends, to the terminal device, the indication information including or indicating the first hybrid automatic repeat request process and the first uplink resource using the first transmission mode, that is, performs the following S304.

S304: The network device sends the indication information to the terminal device.

The indication information includes the first hybrid automatic repeat request process identifier. Optionally, the indication information may further include the first uplink resource using the first transmission mode.

For example, when the network device sends the indication information to the terminal device, the indication information may be carried in downlink control information (Downlink Control Information, DCI). Herein, this embodiment of this application uses only an example in which the indication information may be carried in the DCI for description. However, it does not mean that this embodiment of this application is limited thereto. When the indication information is carried in the DCI, the indication information is learned of by a physical layer, and the physical layer needs to deliver the indication information to a MAC layer.

The network device sends, to the terminal device, the indication information including the first hybrid automatic repeat request process identifier, or sends, to the terminal device, the indication information including the first hybrid automatic repeat request process and the first uplink resource using the first transmission mode, so that the terminal device receives the indication information, and performs the following S305 and S306.

S305: The terminal device determines, based on the first hybrid automatic repeat request process identifier included in the indication information, the first transmission mode and at least one logical channel using the first transmission mode.

The first transmission mode includes: enabling the hybrid automatic repeat request function, disabling the hybrid automatic repeat request function, or at least one hybrid automatic repeat request mode.

In S301, the network device sends the second configuration information to the terminal device, so that the terminal device determines, based on the second configuration information, the transmission mode corresponding to the at least one hybrid automatic repeat request process, that is, the transmission mode that is allowed to be used when the data is transmitted in the hybrid automatic repeat request process of the at least one hybrid automatic repeat request process. Therefore, the terminal device may determine, based on the first hybrid automatic repeat request process identifier and the transmission mode that is allowed to be used when the data is transmitted in the hybrid automatic repeat request process, the first transmission mode corresponding to the first hybrid automatic repeat request process.

Similarly, in S301, the second configuration information sent by the network device to the terminal device further includes an identifier of the hybrid automatic repeat request process used by the at least one logical channel, that is, the hybrid automatic repeat request process that is allowed to be used when the data of the logical channel is transmitted. Therefore, the terminal device may determine, based on the first hybrid automatic repeat request process identifier and the hybrid automatic repeat request process that is allowed to be used when the data of the logical channel is transmitted, at least one logical channel that meets a second condition. The second condition may be understood as that the transmission mode that is allowed to be used when the data is transmitted in the hybrid automatic repeat request process includes the first transmission mode and the transmission mode that is allowed to be used when the data of the logical channel is transmitted includes the first transmission mode, so that at least one logical channel using the first transmission mode is determined. It should be noted that the at least one logical channel that meets the second condition is one or more logical channels on which data is transmitted in the first transmission mode.

After the first transmission mode and the at least one logical channel using the first transmission mode are determined based on the first hybrid automatic repeat request process identifier included in the indication information, the transmission mode that is allowed to be used when the data is transmitted in the hybrid automatic repeat request process, and the hybrid automatic repeat request process that is allowed to be used when the data of the logical channel is transmitted, data of the at least one logical channel may be transmitted in the first transmission mode by using the first hybrid automatic repeat request process, that is, the following S306 is performed.

S306: The terminal device transmits, in the first transmission mode, the data of the at least one logical channel by using the first hybrid automatic repeat request process.

An identifier of the first hybrid automatic repeat request process is the first hybrid automatic repeat request process identifier.

After determining the at least one logical channel using the first transmission mode, the data of the at least one logical channel may be transmitted in the first hybrid automatic repeat request process based on a size of the first uplink resource.

Similarly, it should be noted that, in this embodiment of this application, when data of at least one logical channel is transmitted, if the at least one logical channel includes a plurality of logical channels, and at least two of the plurality of logical channels have different priorities, it indicates that data of the at least two logical channels corresponds to different transmission priorities. A higher priority of a logical channel indicates a higher transmission priority corresponding to data of the logical channel. During specific implementation, the terminal device may perform logical channel prioritization (Logical channel prioritization, LCP) based on priorities of logical channels. First, data of a logical channel with a higher priority is placed in a packet, and then data of a logical channel with a lower priority is placed in the packet. Packet processing is performed on data of at least one logical channel, so that data with a higher priority is first transmitted in a data transmission process.

Optionally, if the first transmission mode is enabling the hybrid automatic repeat request function, the terminal device transmits an encapsulated data packet in the first hybrid automatic repeat request process based on the first uplink resource, includes the encapsulated data packet in a HARQ buffer, and allocates a hybrid automatic repeat request process number to the encapsulated data packet.

Optionally, if the first transmission mode is disabling the hybrid automatic repeat request function, the terminal device may directly transmit an encapsulated data packet in the hybrid automatic repeat request process.

In the technical solution shown in this embodiment, that the first uplink resource using the first transmission mode is not separately preconfigured for the terminal device is used as an example. The network device sends, to the terminal device, the second configuration information used to indicate the transmission mode corresponding to the at least one hybrid automatic repeat request process and the hybrid automatic repeat request process used by the at least one logical channel. In this way, when the terminal device needs to transmit the uplink service, the terminal device sends, to the network device, the service scheduling request message including the identifier of the logical channel group. Therefore, the network device may determine, based on the identifier of the logical channel group in the service scheduling request message and the hybrid automatic repeat request process that is allowed to be used when the data of the logical channel is transmitted, the first hybrid automatic repeat request process corresponding to the identifier of the logical channel; further determine, based on the first hybrid automatic repeat request process identifier and the transmission mode that is allowed to be used when the data is transmitted in the hybrid automatic repeat request process, the first transmission mode corresponding to the first hybrid automatic repeat request process; allocate, to the terminal device based on the first transmission mode and a transmission mode that is allowed to be used by an uplink resource, the first uplink resource using the first transmission mode; and send, to the terminal device, the indication information including the first hybrid automatic repeat request process identifier and the first uplink resource using the first transmission mode. Therefore, the terminal device may determine, based on the first hybrid automatic repeat request process identifier and the transmission mode that is allowed to be used when the data is transmitted in the hybrid automatic repeat request process, the first transmission mode corresponding to the first hybrid automatic repeat request process; determine, based on the first hybrid automatic repeat request process identifier and the hybrid automatic repeat request process that is allowed to be used when the data of the logical channel is transmitted, the logical channel using the first transmission mode; perform packet processing on the data of the logical channel; and transmit, in the first hybrid automatic repeat request process based on the first uplink resource, the data that is on the logical channel and that is obtained after the packet processing. It can be learned that according to the data transmission method provided in this embodiment of this application, the network device may allocate, to the service based on the service scheduling request message, the transmission mode corresponding to the service, include the first hybrid automatic repeat request process identifier in the indication information, and send the indication information to the terminal device, so that the terminal device may transmit data based on the first hybrid automatic repeat request process identifier. In this way, data transmission can be performed in different transmission modes based on requirements of different services, and therefore flexibility of data transmission is improved.

Similarly, it should be noted that in a process of determining the logical channel, determining based on the allowed transmission mode may be used as only one of selection conditions. This application is not limited thereto; and in the process of determining the logical channel, the logical channel may be determined based on another condition and the condition in this application. In other words, it is assumed that a logical channel meets the condition of the allowed transmission mode. In this case, data of the logical channel may not be transmitted on a related resource because another condition is not met.

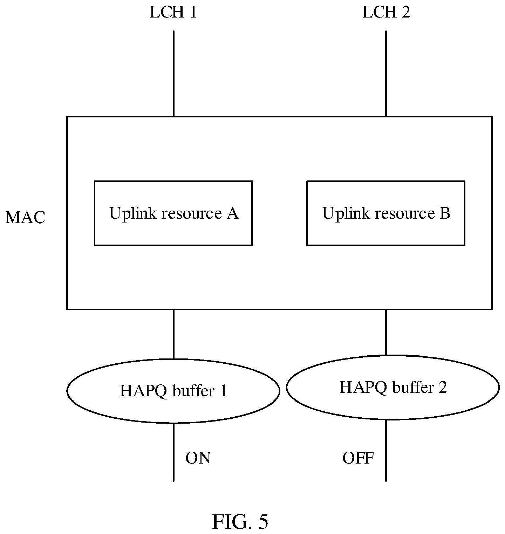

For example, in a possible scenario, refer to FIG. 5. FIG. 5 is another schematic diagram of logical channels and uplink resources according to an embodiment of this application. That a hybrid automatic repeat request process configured for a logical channel 1 (LCH 1) in S301 is a hybrid automatic repeat request process 1, a hybrid automatic repeat request process configured for a logical channel 2 (LCH 2) in S301 is a hybrid automatic repeat request process 2, a processing manner configured for the hybrid automatic repeat request process 1 is enabling the hybrid automatic repeat request function, and a processing manner configured for the hybrid automatic repeat request process 2 is disabling the hybrid automatic repeat request function is used as an example. When the terminal device needs to transmit a service, and needs to perform transmission on the logical channel 1 and the logical channel 2, the terminal device sends, to the network device, a service scheduling request message including an identifier of the logical channel 1 and an identifier of the logical channel 2. Therefore, the network device may determine, based on the identifier of the logical channel 1, the identifier of the logical channel 2, the hybrid automatic repeat request process 1 configured for the logical channel 1, and the hybrid automatic repeat request process 2 configured for the logical channel 2, that a hybrid automatic repeat request process corresponding to the logical channel 1 is the hybrid automatic repeat request process 1 and a hybrid automatic repeat request process corresponding to the logical channel 2 is the hybrid automatic repeat request process 2; then determine, based on the hybrid automatic repeat request process 1, the hybrid automatic repeat request process 2, that the processing manner configured for the hybrid automatic repeat request process 1 is enabling the hybrid automatic repeat request function, and that the processing manner configured for the hybrid automatic repeat request process 2 is disabling the hybrid automatic repeat request function, that a processing manner corresponding to the hybrid automatic repeat request process 1 is enabling the hybrid automatic repeat request function and a processing manner corresponding to the hybrid automatic repeat request process 2 is disabling the hybrid automatic repeat request function; and determine corresponding uplink resources based on the corresponding processing manner that is of enabling the hybrid automatic repeat request function and that is of the hybrid automatic repeat request process 1 and the corresponding processing manner that is of disabling the hybrid automatic repeat request function and that is of the hybrid automatic repeat request process 2. If an uplink resource A configured by the network device is used to transmit a service for which the hybrid automatic repeat request function is enabled, and an uplink resource B is used to transmit a service for which the hybrid automatic repeat request function is disabled, it may be determined that a transmission mode corresponding to the uplink resource A is enabling the hybrid automatic repeat request function, and a transmission mode corresponding to the uplink resource B is disabling the hybrid automatic repeat request function. The uplink resource A and the corresponding hybrid automatic repeat request process 1 are sent to the terminal device by using indication information, and the uplink resource B and the corresponding hybrid automatic repeat request process 2 are sent to the terminal device by using the indication information. Therefore, the terminal device may determine, based on the hybrid automatic repeat request process 1 corresponding to the uplink resource A, the hybrid automatic repeat request process 2 corresponding to the uplink resource B, that a processing manner preconfigured for the hybrid automatic repeat request process 1 is enabling the hybrid automatic repeat request function, and that a processing manner preconfigured for the hybrid automatic repeat request process 2 is disabling the hybrid automatic repeat request function, that a transmission mode corresponding to the hybrid automatic repeat request process 1 is enabling the hybrid automatic repeat request function, and a transmission mode corresponding to the hybrid automatic repeat request process 2 is disabling the hybrid automatic repeat request function; determine, based on the hybrid automatic repeat request process 1, the hybrid automatic repeat request process 2, and identifiers of hybrid automatic repeat request processes used by logical channels, that a logical channel using the transmission mode of enabling the hybrid automatic repeat request function is the logical channel 1, and a logical channel using the transmission mode of disabling the hybrid automatic repeat request function is the logical channel 2; and transmit, based on a size of the uplink resource A, data of the logical channel 1 in the hybrid automatic repeat request process 1 by using the mode of enabling the hybrid automatic repeat request function, and transmit, based on a size of the uplink resource B, data of the logical channel 2 in the hybrid automatic repeat request process 2 by using the mode of disabling the hybrid automatic repeat request function. In this way, data transmission can be performed in different transmission modes based on requirements of different services, and therefore flexibility of data transmission is improved.

In the embodiments shown in FIG. 2 and FIG. 3, the network device sends, to the terminal device, the indication information including the first transmission mode or the first hybrid automatic repeat request process identifier, so that the terminal device may determine the one or more corresponding logical channels based on the first transmission mode or the first hybrid automatic repeat request process identifier; and transmit, on the first uplink resource or in the first hybrid automatic repeat request process, the data of the one or more logical channels.

In still another possible implementation, the network device sends the indication information to the terminal device, where the indication information includes one or more identifiers of one or more logical channels. In this way, the terminal device may transmit, on a first uplink resource, data of the one or more logical channels based on the identifiers of the one or more logical channels. It should be noted that, in this implementation, if the indication information includes only the identifiers of the one or more logical channels, the terminal device cannot determine the first transmission mode. In other words, the indication information cannot indicate the first transmission mode.

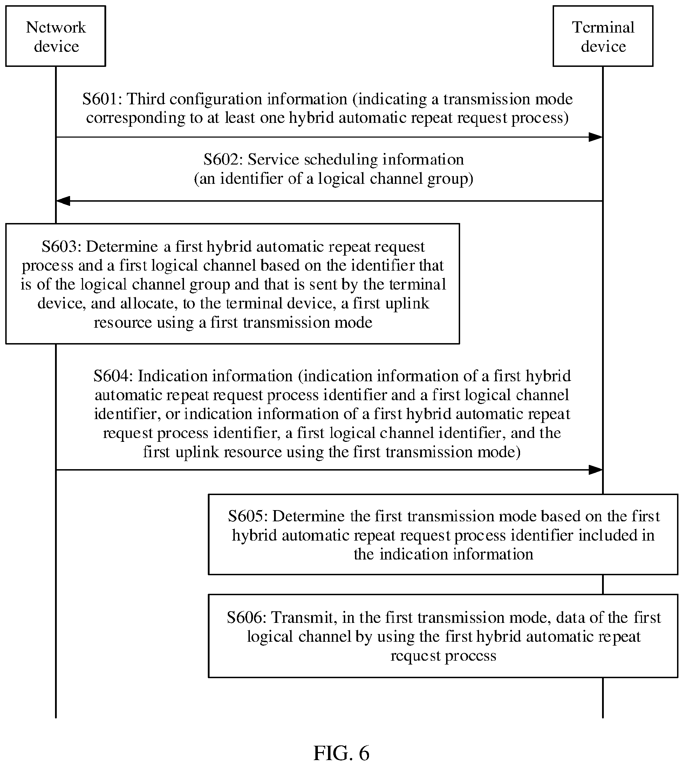

Further, optionally, the indication information includes a first logical channel identifier and a first hybrid automatic repeat request process identifier. Correspondingly, the network sends third configuration information to the terminal device, where the third configuration information is used to: indicate a transmission mode corresponding to at least one hybrid automatic repeat request process, or indicate a correspondence between at least one hybrid automatic repeat request process and a corresponding transmission mode. In this manner, the terminal device may determine, based on an indication of the third configuration information, the first transmission mode indicated by the indication information, and send, in the first transmission mode, the data of the one or more logical channels. For example, FIG. 6 is a schematic flowchart of still another data transmission method according to an embodiment of this application; and a network device in FIG. 6 may correspond to the network device shown in FIG. 1, and a terminal device in FIG. 6 may correspond to the terminal device shown in FIG. 1.

Optionally, the data transmission method may include S601: The network device sends the third configuration information to the terminal device.

The third configuration information is used to indicate the transmission mode corresponding to the at least one hybrid automatic repeat request process, that is, a transmission mode corresponding to each of the at least one hybrid automatic repeat request process. For example, a quantity of the at least one hybrid automatic repeat request process may be one or more, for example, two. The quantity is specifically set based on an actual requirement. Herein, the quantity of the at least one hybrid automatic repeat request process is not further limited in this embodiment of this application. It should be noted that, in this embodiment of this application, the transmission mode that corresponds to the at least one hybrid automatic repeat request process and that is indicated by the third configuration information may be understood as a transmission mode that is allowed to be used when data is transmitted in one, more, or each of the at least one hybrid automatic repeat request process, or may be understood as a mapping relationship between each of the at least one hybrid automatic repeat request process and a transmission mode. Specifically, the third configuration information indicates a corresponding transmission mode for each of the at least one hybrid automatic repeat request process. Optionally, at least two hybrid automatic repeat request processes in the at least one hybrid automatic repeat request process correspond to one or more same transmission modes. Still optionally, each of the at least one hybrid automatic repeat request process corresponds to a different transmission mode.

For example, when the network device sends the third configuration information to the terminal device, the third configuration information may be carried in radio resource control (Radio Resource Control, RRC) signaling, for example, may be carried in signaling used to configure the logical channel. Certainly, the third configuration information may alternatively be carried in DCI or a medium access control control element (Medium Access Control Control Element, MAC CE). Herein, this embodiment of this application uses only an example in which the third configuration information may be carried in the foregoing four types of signaling for description. However, it does not mean that this embodiment of this application is limited thereto.

In S601, the network device sends, to the terminal device, the third configuration information used to indicate the transmission mode that is allowed to be used when the data is transmitted in the hybrid automatic repeat request process. The terminal device receives the third configuration information, determines the first transmission mode corresponding to a first hybrid automatic repeat request process, and transmits, in the first hybrid automatic repeat request process by using the first transmission mode, data of a first logical channel using the first transmission mode, where the first hybrid automatic repeat request process identifier is an identifier of the first hybrid automatic repeat request process.

Optionally, the data transmission method may include S602: The terminal device sends a service scheduling request message to the network device.

The service scheduling request message includes an identifier of a logical channel group having to-be-sent data. The logical channel group includes one or more logical channels.

For example, when the terminal device sends the service scheduling request message to the network device, the service scheduling request message may be a scheduling request (Scheduling Request, SR), or may be a buffer status report (Buffer Status Report, BSR). Herein, this embodiment of this application uses only an example in which the service scheduling request message may be the SR or the BSR for description. However, it does not mean that this embodiment of this application is limited thereto. For meanings of the SR and the BSR, refer to explanations in a current technology. It should be noted herein that the service scheduling request message may also be service scheduling request information, and may be carried in a message or an information element (information element, IE).

In a service scheduling process, when the terminal device needs to transmit an uplink service, the terminal device determines one or more logical channels or one or more logical channel groups used to transmit data of the uplink service, where the one or more logical channels belong to the one or more logical channel groups. The service scheduling request message including identifiers of the one or more logical channel groups is sent to the network device. The network device receives the service scheduling request message including the identifier of the logical channel group, and performs one or more of the following S603 and S604.

S603: The network device determines the first hybrid automatic repeat request process and the first logical channel based on the identifier that is of the logical channel group and that is sent by the terminal device.

The first hybrid automatic repeat request process corresponds to the first transmission mode, and the first transmission mode corresponds to a first uplink resource.

The uplink resource is a UL grant, the UL grant may be a dynamic uplink resource or a configured uplink resource (a semi-persistent scheduling resource or a grant-free uplink resource), and the uplink resource and the first transmission mode may be indicated to the terminal device together (or sent to the terminal device together) by using the third configuration information, or indicated (or sent) to the terminal device in a manner different from being indicated by the third configuration information. For example, the uplink resource may be configured for the terminal device before the terminal device sends the service scheduling request information.

In this embodiment of this application, the network device determines the first transmission mode based on the identifier that is of the logical channel group and that is included in the service scheduling request message sent by the terminal device and/or a transmission mode corresponding to at least one logical channel. The transmission mode corresponding to the at least one logical channel may be understood as a transmission mode (or referred to as an available transmission mode) that is allowed to be used when data of a logical channel of the at least one logical channel is transmitted, or may be understood as a mapping relationship between each of the at least one logical channel and a transmission mode. After determining the first transmission mode, because the network device preconfigures the transmission mode (or referred to as an available transmission mode) that is allowed to be used when the data is transmitted in the hybrid automatic repeat request process, the network device may determine, based on the first transmission mode and the transmission mode that is allowed to be used when the data is transmitted in the hybrid automatic repeat request process, the first hybrid automatic repeat request process using the first transmission mode. In addition, the network device may further determine, based on the first hybrid automatic repeat request process and a hybrid automatic repeat request process (configured by the network device) used by at least one logical channel, the first logical channel, so that the first hybrid automatic repeat request process and the first logical channel are determined. The hybrid automatic repeat request process used by the at least one logical channel may be understood as a hybrid automatic repeat request process that is allowed to be used when data of a logical channel of the at least one logical channel is transmitted, or may be understood as a mapping relationship between each of the at least one logical channel and a hybrid automatic repeat request process.

It should be noted that, in this embodiment of this application, the first uplink resource, the first hybrid automatic repeat request process identifier, and the first logical channel identifier may be indicated to the terminal device together by using the indication information, or may be separately indicated or sent to the terminal device. If the first uplink resource using the first transmission mode is not preconfigured for the terminal device, the first uplink resource needs to be further allocated to the terminal device based on the first transmission mode and a transmission mode that is allowed to be used when data is transmitted on an uplink resource. On the contrary, if the first uplink resource using the first transmission mode is preconfigured for the terminal device, there is no need to further determine herein the first uplink resource using the first transmission mode. For example, when the first uplink resource is configured for the terminal device, the first uplink resource may be configured for the terminal device before the terminal device sends the service scheduling request information. Further, optionally, when configuring the first uplink resource for the terminal device or after configuring the first uplink resource, the network device configures the first transmission mode corresponding to the first uplink resource for the terminal device. In this way, when a service arrives, the terminal device may directly transmit data on the first uplink resource in the first transmission mode.

It should be noted that, in this embodiment of this application, when the first logical channel using the first transmission mode is determined, a quantity of the logical channel may be one or more. When there are a plurality of logical channels, an identifier of each of the plurality of logical channels and the first hybrid automatic repeat request process are carried in the indication information and sent to the terminal device.

Optionally, the network device determines the first hybrid automatic repeat request process and the first logical channel, and sends, to the terminal device, the indication information including or indicating the first hybrid automatic repeat request process identifier and the first logical channel identifier, or the network device sends, to the terminal device, the indication information including or indicating the first hybrid automatic repeat request process identifier, the first logical channel identifier, and the first uplink resource using the first transmission mode, that is, performs the following S604.

S604: The network device sends the indication information to the terminal device.

The indication information includes the first hybrid automatic repeat request process identifier and the first logical channel identifier, where the first hybrid automatic repeat request process identifier is an identifier of the first hybrid automatic repeat request process, and the first logical channel identifier is an identifier of the first logical channel. Optionally, the indication information may further include the first uplink resource using the first transmission mode.

For example, when the network device sends the indication information to the terminal device, the indication information may be carried in downlink control information (Downlink Control Information, DCI). Herein, this embodiment of this application uses only an example in which the indication information may be carried in the DCI for description. However, it does not mean that this embodiment of this application is limited thereto. When the indication information is carried in the DCI, the indication information is learned of by a physical layer, and the physical layer needs to deliver the indication information to a MAC layer.

The network device sends, to the terminal device, the indication information including the first hybrid automatic repeat request process identifier and the first logical channel identifier, or sends, to the terminal device, the indication information including the first hybrid automatic repeat request process identifier, the first logical channel identifier, and the first uplink resource using the first transmission mode, so that the terminal device receives the indication information, and performs the following S605 and S606.

S605: The terminal device determines the first transmission mode based on the first hybrid automatic repeat request process identifier included in the indication information.

The first transmission mode includes: enabling the hybrid automatic repeat request function, disabling the hybrid automatic repeat request function, or at least one hybrid automatic repeat request mode.

In S601, the network device sends the third configuration information to the terminal device, so that the terminal device determines, based on the third configuration information, the transmission mode corresponding to the at least one hybrid automatic repeat request process, that is, the transmission mode that is allowed to be used when the data is transmitted in the hybrid automatic repeat request process of the at least one hybrid automatic repeat request process. Therefore, the terminal device may determine, based on the first hybrid automatic repeat request identifier and the transmission mode that is allowed to be used when the data is transmitted in the hybrid automatic repeat request process, the first transmission mode corresponding to the first hybrid automatic repeat request process.

After the first transmission mode is determined based on the first hybrid automatic repeat request process identifier included in the indication information and the transmission mode that is allowed to be used when the data is transmitted in the hybrid automatic repeat request process, the data of the first logical channel may be transmitted in the first transmission mode by using the first hybrid automatic repeat request process, that is, the following S606 is performed.

S606: The terminal device transmits, in the first transmission mode, the data of the first logical channel by using the first hybrid automatic repeat request process.

After determining the first transmission mode in S605, the data of the first logical channel may be transmitted, based on a size of the first uplink resource, in the first hybrid automatic repeat request process by using the first transmission mode.

Similarly, it should be noted that, in this embodiment of this application, when there are at least two logical channels using the first transmission mode, that is, the indication information sent by the network device includes at least two logical channel identifiers, if data of the at least two logical channels is transmitted in the first transmission mode, and priorities of the at least two logical channels are different, it indicates that the data of the at least two logical channels corresponds to different transmission priorities. A higher priority of a logical channel indicates a higher transmission priority corresponding to data of the logical channel. During specific implementation, the terminal device may perform logical channel prioritization (Logical channel prioritization, LCP) based on priorities of logical channels. First, data of a logical channel with a higher priority is placed in a packet, and then data of a logical channel with a lower priority is placed in the packet. Packet processing is performed on data of at least one logical channel, so that data with a higher priority is first transmitted in a data transmission process.

Optionally, if the first transmission mode is enabling the hybrid automatic repeat request function, the terminal device transmits an encapsulated data packet in the first hybrid automatic repeat request process based on the first uplink resource, includes the encapsulated data packet in a HARQ buffer, and allocates a hybrid automatic repeat request process number to the encapsulated data packet.

Optionally, if the first transmission mode is disabling the hybrid automatic repeat request function, the terminal device may directly transmit an encapsulated data packet in the hybrid automatic repeat request process.

In the technical solution shown in this embodiment, that the first uplink resource using the first transmission mode is not separately preconfigured for the terminal device is used as an example. The network device sends, to the terminal device, the third configuration information used to indicate the transmission mode corresponding to the at least one hybrid automatic repeat request process. In this way, when the terminal device needs to transmit the uplink service, the terminal device sends, to the network device, the service scheduling request message including the identifier of the logical channel group. Therefore, the network device may determine, based on the identifier of the logical channel group in the service scheduling request message and the transmission mode that is allowed to be used when the data of the logical channel is transmitted, the first transmission mode corresponding to an identifier of a logical channel; determine, based on the first transmission mode and the transmission mode that is allowed to be used when the data is transmitted in the hybrid automatic repeat request process, the first hybrid automatic repeat request process corresponding to the first transmission mode; and further determine the first logical channel based on the first hybrid automatic repeat request process and the hybrid automatic repeat request process used by the at least one logical channel, so that the first hybrid automatic repeat request process and the first logical channel are determined. In addition, the network device may further allocate, based on the first transmission mode and the transmission mode that is allowed to be used by the uplink resource, the first uplink resource using the first transmission mode; and then send, to the terminal device, the indication information including the first hybrid automatic repeat request process identifier, the first logical channel identifier, and the first uplink resource using the first transmission mode. Therefore, the terminal device may determine the first transmission mode based on the first hybrid automatic repeat request process identifier and the transmission mode that is allowed to be used when the data is transmitted in the hybrid automatic repeat request process; perform packet processing on the data of the first logical channel; and then transmit, in the first hybrid automatic repeat request process based on the first uplink resource, the data that is on the first logical channel and that is obtained after the packet processing. It can be learned that according to the data transmission method provided in this embodiment of this application, the network device may allocate, to the service based on the service scheduling request message, the transmission mode corresponding to the service, include the first hybrid automatic repeat request process identifier and the first logical channel identifier in the indication information, and send the indication information to the terminal device, so that the terminal device transmits the data of the first logical channel in the first hybrid automatic repeat request process based on the first transmission mode. In this way, data transmission can be performed in different transmission modes based on requirements of different services, and therefore flexibility of data transmission is improved.

It should be noted that in a process of determining the logical channel, determining based on the allowed transmission mode may be used as only one of selection conditions. This application is not limited thereto; and in selection and determining of the logical channel, the logical channel may be determined based on another condition and the condition in this application. In other words, it is assumed that a logical channel meets the condition of the allowed transmission mode. In this case, data of the logical channel may not be transmitted on a related resource because another condition is not met.

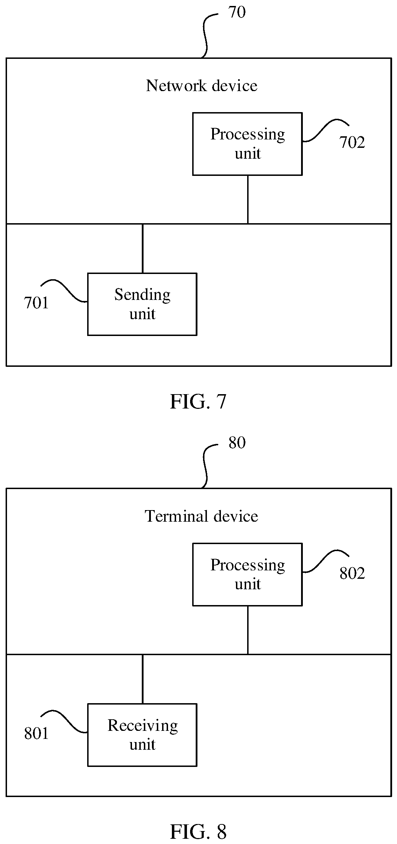

FIG. 7 is a schematic structural diagram of a network device 70 according to an embodiment of this application. For example, referring to FIG. 7, the network device 70 may include:
a sending unit 701, configured to send indication information to a terminal device, where the indication information is used to indicate a first transmission mode, and the first transmission mode includes: enabling a hybrid automatic repeat request function, disabling the hybrid automatic repeat request function, or at least one hybrid automatic repeat request mode.

Optionally, the indication information includes at least one of the first transmission mode, a first hybrid automatic repeat request process identifier, and one or more identifiers of one or more logical channels.

Optionally, the indication information includes the first transmission mode, and the network device 70 further includes:
a processing unit 702, configured to determine the first transmission mode based on an identifier that is of a logical channel group and that is sent by the terminal device.

Optionally, the sending unit 701 is further configured to send first configuration information to the terminal device, where the first configuration information is used to indicate a transmission mode corresponding to at least one logical channel.

Optionally, the indication information includes the first hybrid automatic repeat request process identifier.

The processing unit 702 is further configured to determine a first hybrid automatic repeat request process based on an identifier that is of a logical channel group and that is sent by the terminal device, where an identifier of the first hybrid automatic repeat request process includes the first hybrid automatic repeat request process identifier.

Optionally, the sending unit 701 is further configured to send second configuration information to the terminal device, where the second configuration information is used to indicate a transmission mode corresponding to at least one hybrid automatic repeat request process.

Optionally, the first transmission mode includes at least two hybrid automatic repeat request modes, there are two hybrid automatic repeat request modes in the at least two hybrid automatic repeat request modes, and the two hybrid automatic repeat request modes meet at least one of the following:
maximum quantities of hybrid automatic repeat request retransmissions are different;
redundancy version numbers or redundancy version sequences are different;
modulation and coding schemes are different;
round-trip transmission latencies are different;
durations from receiving scheduling information or feedback information to performing data transmission or retransmission are different;
code block group transmission modes are different;
hybrid automatic repeat request feedback codebooks are different; and
hybrid automatic repeat request priorities are different.

The network device 70 shown in this embodiment of this application may perform the data transmission methods on a side of the network device 70 in the embodiments shown in FIG. 2 to FIG. 6. An implementation principle and a beneficial effect of the network device 70 are similar to those of the data transmission methods on the side of the network device 70. Details are not described herein again.

FIG. 8 is a schematic structural diagram of a terminal device 80 according to an embodiment of this application. For example, referring to FIG. 8, the terminal device 80 may include:
a receiving unit 801, configured to receive indication information sent by a network device; and
a processing unit 802, configured to determine a first transmission mode based on the indication information, where the first transmission mode includes: enabling a hybrid automatic repeat request function, disabling the hybrid automatic repeat request function, or at least one hybrid automatic repeat request mode.

Optionally, the indication information includes at least one of the first transmission mode, a first hybrid automatic repeat request process identifier, and one or more identifiers of one or more logical channels.

Optionally, the indication information includes the first transmission mode.

The processing unit 802 is further configured to: determine at least one logical channel based on the first transmission mode; and transmit, in the first transmission mode, data of the at least one logical channel.

Optionally, the receiving unit 801 is further configured to receive first configuration information sent by the network device, where the first configuration information is used to indicate a transmission mode corresponding to at least one logical channel.

Optionally, the indication information includes the first hybrid automatic repeat request process identifier.

The processing unit 802 is further configured to: determine at least one logical channel based on the first hybrid automatic repeat request process identifier; and transmit, in the first transmission mode, data of the at least one logical channel by using a first hybrid automatic repeat request process, where an identifier of the first hybrid automatic repeat request process is the first hybrid automatic repeat request process identifier.

Optionally, the receiving unit 801 is further configured to receive second configuration information sent by the network device, where the second configuration information is used to indicate a transmission mode corresponding to at least one hybrid automatic repeat request process.

Optionally, the first transmission mode includes at least two hybrid automatic repeat request modes, there are two hybrid automatic repeat request modes in the at least two hybrid automatic repeat request modes, and the two hybrid automatic repeat request modes meet at least one of the following:
maximum quantities of hybrid automatic repeat request retransmissions are different;
redundancy version numbers or redundancy version sequences are different;
modulation and coding schemes are different;
round-trip transmission latencies are different;
durations from receiving scheduling information or feedback information to performing data transmission or retransmission are different;
code block group transmission modes are different;
hybrid automatic repeat request feedback codebooks are different; and
hybrid automatic repeat request priorities are different.

The terminal device 80 shown in this embodiment of this application may perform the data transmission methods on a side of the terminal device 80 in the embodiments shown in FIG. 2 to FIG. 6. An implementation principle and a beneficial effect of the terminal device 80 are similar to those of the data transmission methods on the side of the terminal device 80. Details are not described herein again.

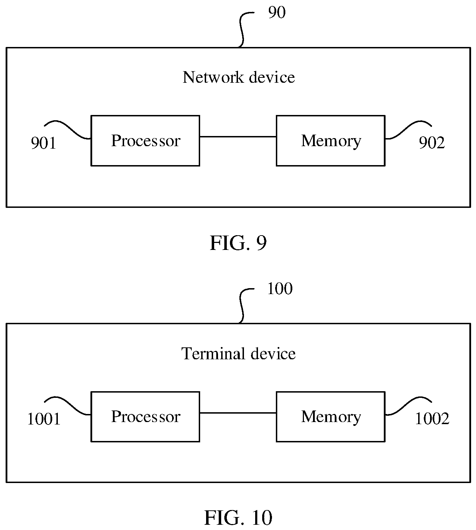

FIG. 9 is a schematic structural diagram of another network device 90 according to an embodiment of this application. For example, referring to FIG. 9, the network device 90 may include a processor 901 and a memory 902.

The memory 902 is configured to store program instructions.

The processor 901 is configured to: read the program instructions in the memory 902, and perform, based on the program instructions in the memory 902, the data transmission methods on a side of the network device 90 in the embodiments shown in FIG. 2 to FIG. 6. An implementation principle and a beneficial effect of the network device 90 are similar to those of the data transmission methods on the side of the network device 90. Details are not described herein again.

FIG. 10 is a schematic structural diagram of another terminal device 100 according to an embodiment of this application. For example, referring to FIG. 10, the terminal device 100 may include a processor 1001 and a memory 1002.

The memory 1002 is configured to store program instructions.

The processor 1001 is configured to: read the program instructions in the memory 1002, and perform, based on the program instructions in the memory 1002, the data transmission methods on a side of the terminal device 100 in the embodiments shown in FIG. 2 to FIG. 6. An implementation principle and a beneficial effect of the terminal device 100 are similar to those of the data transmission methods on the side of the terminal device 100. Details are not described herein again.

An embodiment of this application further provides a chip. The chip stores a computer program; and when the computer program is executed by a processor, the data transmission methods on a network device side in the embodiments shown in FIG. 2 to FIG. 6 are performed. An implementation principle and a beneficial effect of the chip are similar to those of the data transmission methods on the network device side. Details are not described herein again. Alternatively, the data transmission methods on a terminal device side in the embodiments shown in FIG. 2 to FIG. 6 are performed. An implementation principle and a beneficial effect of the chip are similar to those of the data transmission methods on the terminal device side. Details are not described herein again.

An embodiment of this application further provides a computer storage medium, including instructions. When the instructions are run by one or more processors, a network device is enabled to perform the data transmission methods on a network device side in the embodiments shown in FIG. 2 to FIG. 6. An implementation principle and a beneficial effect of the computer storage medium are similar to those of the data transmission methods on the network device side. Details are not described herein again. Alternatively, when the instructions are run by one or more processors, a terminal device is enabled to perform the data transmission methods on a terminal device side in the embodiments shown in FIG. 2 to FIG. 6. An implementation principle and a beneficial effect of the computer storage medium are similar to those of the data transmission methods on the terminal device side. Details are not described herein again.

The processor in the foregoing embodiments may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in the embodiments of this application. The general-purpose processor may be a microprocessor, or the processor may be any conventional processor or the like. The steps of the methods disclosed with reference to the embodiments of this application may be directly presented as being performed and completed by a hardware decoding processor, or performed and completed by a combination of hardware and a software module in a decoding processor. A software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in a memory, and the processor reads instructions in the memory and completes the steps of the foregoing methods in combination with hardware in the processor.

In the several embodiments provided in this application, it should be understood that the disclosed apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of hardware in addition to a software function unit.

## Claims

1. A data transmission method, comprising:
sending, by a network device, indication information to a terminal device, wherein the indication information is used to indicate a first transmission mode, and the first transmission mode comprises: enabling a hybrid automatic repeat request function, disabling the hybrid automatic repeat request function, or at least one hybrid automatic repeat request mode.

2. The method according to claim 1, wherein
the indication information comprises at least one of the first transmission mode, a first hybrid automatic repeat request process identifier, and one or more identifiers of one or more logical channels.

3. The method according to claim 2, wherein the indication information comprises the first transmission mode, and the method further comprises:
determining, by the network device, the first transmission mode based on an identifier that is of a logical channel group and that is sent by the terminal device.

4. The method according to claim 3, wherein the method further comprises:
sending, by the network device, first configuration information to the terminal device, wherein the first configuration information is used to indicate a transmission mode corresponding to at least one logical channel.

5. The method according to claim 2, wherein the indication information comprises the first hybrid automatic repeat request process identifier, and the method further comprises:
determining, by the network device, a first hybrid automatic repeat request process based on an identifier that is of a logical channel group and that is sent by the terminal device, wherein an identifier of the first hybrid automatic repeat request process is the first hybrid automatic repeat request process identifier.

6. The method according to claim 5, wherein the method further comprises:
sending, by the network device, second configuration information to the terminal device, wherein the second configuration information is used to indicate a transmission mode corresponding to at least one hybrid automatic repeat request process.

7. The method according to any one of claims 1 to 6, wherein
the first transmission mode comprises at least two hybrid automatic repeat request modes, there are two hybrid automatic repeat request modes in the at least two hybrid automatic repeat request modes, and the two hybrid automatic repeat request modes meet at least one of the following:
maximum quantities of hybrid automatic repeat request retransmissions are different;
redundancy version numbers or redundancy version sequences are different;
modulation and coding schemes are different;
round-trip transmission latencies are different;
durations from receiving scheduling information or feedback information to performing data transmission or retransmission are different;
code block group transmission modes are different;
hybrid automatic repeat request feedback codebooks are different; and
hybrid automatic repeat request priorities are different.

8. A data transmission method, comprising:
receiving, by a terminal device, indication information sent by a network device; and
determining, by the terminal device, a first transmission mode based on the indication information, wherein the first transmission mode comprises: enabling a hybrid automatic repeat request function, disabling the hybrid automatic repeat request function, or at least one hybrid automatic repeat request mode.

9. The method according to claim 8, wherein
the indication information comprises at least one of the first transmission mode, a first hybrid automatic repeat request process identifier, and one or more identifiers of one or more logical channels.

10. The method according to claim 9, wherein the indication information comprises the first transmission mode, and the method further comprises:
determining, by the terminal device, at least one logical channel based on the first transmission mode; and
transmitting, by the terminal device in the first transmission mode, data of the at least one logical channel.

11. The method according to claim 10, wherein the method further comprises:
receiving, by the terminal device, first configuration information sent by the network device, wherein the first configuration information is used to indicate a transmission mode corresponding to at least one logical channel.

12. The method according to claim 9, wherein the indication information comprises the first hybrid automatic repeat request process identifier, and the method further comprises:
determining, by the terminal device, at least one logical channel based on the first hybrid automatic repeat request process identifier; and
transmitting, by the terminal device in the first transmission mode, data of the at least one logical channel by using a first hybrid automatic repeat request process, wherein an identifier of the first hybrid automatic repeat request process is the first hybrid automatic repeat request process identifier.

13. The method according to claim 12, wherein the method further comprises:
receiving, by the terminal device, second configuration information sent by the network device, wherein the second configuration information is used to indicate a transmission mode corresponding to at least one hybrid automatic repeat request process.

14. The method according to any one of claims 8 to 13, wherein
the first transmission mode comprises at least two hybrid automatic repeat request modes, there are two hybrid automatic repeat request modes in the at least two hybrid automatic repeat request modes, and the two hybrid automatic repeat request modes meet at least one of the following:
maximum quantities of hybrid automatic repeat request retransmissions are different;
redundancy version numbers or redundancy version sequences are different;
modulation and coding schemes are different;
round-trip transmission latencies are different;
durations from receiving scheduling information or feedback information to performing data transmission or retransmission are different;
code block group transmission modes are different;
hybrid automatic repeat request feedback codebooks are different; and
hybrid automatic repeat request priorities are different.

15. A communication apparatus, comprising:
a sending unit, configured to send indication information to a terminal device, wherein the indication information is used to indicate a first transmission mode, and the first transmission mode comprises: enabling a hybrid automatic repeat request function, disabling the hybrid automatic repeat request function, or at least one hybrid automatic repeat request mode.

16. The communication apparatus according to claim 15, wherein
the indication information comprises at least one of the first transmission mode, a first hybrid automatic repeat request process identifier, and one or more identifiers of one or more logical channels.

17. The communication apparatus according to claim 16, wherein the indication information comprises the first transmission mode, and the device further comprises:
a processing unit, configured to determine the first transmission mode based on an identifier that is of a logical channel group and that is sent by the terminal device.

18. The communication apparatus according to claim 17, wherein
the sending unit is further configured to send first configuration information to the terminal device, wherein the first configuration information is used to indicate a transmission mode corresponding to at least one logical channel.

19. The communication apparatus according to claim 16, wherein the indication information comprises the first hybrid automatic repeat request process identifier; and
a processing unit is further configured to determine a first hybrid automatic repeat request process based on an identifier that is of a logical channel group and that is sent by the terminal device, wherein an identifier of the first hybrid automatic repeat request process is the first hybrid automatic repeat request process identifier.

20. The communication apparatus according to claim 19, wherein
the sending unit is further configured to send second configuration information to the terminal device, wherein the second configuration information is used to indicate a transmission mode corresponding to at least one hybrid automatic repeat request process.

21. The communication apparatus according to any one of claims 15 to 20, wherein
the first transmission mode comprises at least two hybrid automatic repeat request modes, there are two hybrid automatic repeat request modes in the at least two hybrid automatic repeat request modes, and the two hybrid automatic repeat request modes meet at least one of the following:
maximum quantities of hybrid automatic repeat request retransmissions are different;
redundancy version numbers or redundancy version sequences are different;
modulation and coding schemes are different;
round-trip transmission latencies are different;
durations from receiving scheduling information or feedback information to performing data transmission or retransmission are different;
code block group transmission modes are different;
hybrid automatic repeat request feedback codebooks are different; and
hybrid automatic repeat request priorities are different.

22. A communication apparatus, comprising:
a receiving unit, configured to receive indication information sent by a network device; and
a processing unit, configured to determine a first transmission mode based on the indication information, wherein the first transmission mode comprises: enabling a hybrid automatic repeat request function, disabling the hybrid automatic repeat request function, or at least one hybrid automatic repeat request mode.

23. The communication apparatus according to claim 22, wherein
the indication information comprises at least one of the first transmission mode, a first hybrid automatic repeat request process identifier, and one or more identifiers of one or more logical channels.

24. The communication apparatus according to claim 23, wherein the indication information comprises the first transmission mode; and
the processing unit is further configured to: determine at least one logical channel based on the first transmission mode; and transmit, in the first transmission mode, data of the at least one logical channel.

25. The communication apparatus according to claim 24, wherein
the receiving unit is further configured to receive first configuration information sent by the network device, wherein the first configuration information is used to indicate a transmission mode corresponding to at least one logical channel.

26. The communication apparatus according to claim 23, wherein the indication information comprises the first hybrid automatic repeat request process identifier; and
the processing unit is further configured to: determine at least one logical channel based on the first hybrid automatic repeat request process identifier; and transmit, in the first transmission mode, data of the at least one logical channel by using a first hybrid automatic repeat request process, wherein an identifier of the first hybrid automatic repeat request process is the first hybrid automatic repeat request process identifier.

27. The communication apparatus according to claim 26, wherein
the receiving unit is further configured to receive second configuration information sent by the network device, wherein the second configuration information is used to indicate a transmission mode corresponding to at least one hybrid automatic repeat request process.

28. The communication apparatus according to any one of claims 22 to 27, wherein
the first transmission mode comprises at least two hybrid automatic repeat request modes, there are two hybrid automatic repeat request modes in the at least two hybrid automatic repeat request modes, and the two hybrid automatic repeat request modes meet at least one of the following:
maximum quantities of hybrid automatic repeat request retransmissions are different;
redundancy version numbers or redundancy version sequences are different;
modulation and coding schemes are different;
round-trip transmission latencies are different;
durations from receiving scheduling information or feedback information to performing data transmission or retransmission are different;
code block group transmission modes are different;
hybrid automatic repeat request feedback codebooks are different; and
hybrid automatic repeat request priorities are different.

29. A communication apparatus, comprising a processor and a memory, wherein
the memory is configured to store program instructions; and
the processor is configured to: read the program instructions in the memory, and perform, based on the program instructions in the memory, the data transmission method according to any one of claims 1 to 7.

30. A communication apparatus, comprising a processor and a memory, wherein
the memory is configured to store program instructions; and
the processor is configured to: read the program instructions in the memory, and perform, based on the program instructions in the memory, the data transmission method according to any one of claims 8 to 14.

31. A computer storage medium, comprising instructions, wherein when the instructions are run on one or more processors, a communication apparatus is enabled to perform the data transmission method according to any one of claims 1 to 7 or the data transmission method according to any one of claims 8 to 14.
